# EUROPÄISCHE PATENTSCHRIFT

(11) **EP 1 236 306 B1**
(45) Veröffentlichungstag und Bekanntmachung des Hinweises auf die Patenterteilung: **27.09.2006**
(21) Anmeldenummer: 00989802.4
(22) Anmeldetag: 24.11.2000
(51) Int. Cl.: H04L 12/10, H04L 12/40

(54) **BUSSYSTEM**
BUS SYSTEM
SYSTEME DE BUS

(30) Priorität: 10.12.1999 DE 19959730
(43) Veröffentlichungstag der Anmeldung: 04.09.2002
(73) Patentinhaber: SIEMENS AKTIENGESELLSCHAFT, 80333 München (DE)
(72) Erfinder: INDEFREY, Klaus, 90489 Nürnberg (DE); WIESGICKL, Bernhard, 92249 Vilseck (DE)
(86) Internationale Anmeldenummer: PCT/DE2000/004173
(87) Internationale Veröffentlichungsnummer: WO 2001/043360

(56) Entgegenhaltungen:
- EP-A- 0 837 394
- US-A- 4 099 157

## Beschreibung

Bussystem, insbesondere für Kraftfahrzeuge, mit mindestens zwei elektrisch parallelgeschalteten Busleitungen, die jeweils zur Übertragung von Energie und Daten dienen, mit einer an die Busleitungen angeschlossenen Energieversorgungsquelle und mit einem an die Busleitungen angeschlossenen Master zur Einkopplung der Daten und mehreren an die Busleitungen angekoppelten Slaves, die abhängig von den über die Busleitungen empfangenen Daten jeweils mindestens einen Verbraucher ansteuern.

Aus der US 4,099,157 ist es bei Kraftfahrzeugen bekannt, Einzelleitungen zur Übertragung von Energie und Signalen zu verwenden, wobei das Chassis des Kraftfahrzeugs als Rückleitung dient. Die Einzelleitung wird hier in einem Zustandsüberwachungssystem eines Kraftfahrzeugs eingesetzt. Dieses System umfaßt eine Gleichspannungsquelle, einen Sensor zur Überwachung spezieller Zustände, einen Detektor, der auf den Zustand des Sensors reagiert, einen vom Detektor angesteuerten Lastkreis und eine Anzeige zur Meldung des überwachten Zustands.

Bussysteme mit nur einer Hin- und Rückleitung haben zwar den Vorteil, daß nur eine einzige Leitung zur Versorgung mehrerer Verbraucher benötigt wird, jedoch können bei Ausfall des Bussystems sämtliche Verbraucher betroffen sein. In vielen Anwendungsfällen, wie z.B. bei Kraftfahrzeugen, wird eine hohe Verfügbarkeit verlangt. Bei Ausfällen des Bussystems, z.B. als Folge eines Unfalls, ist es wünschenswert, daß nicht unmittelbar beschädigte Verbraucher im Kraftfahrzeug noch einsatzfähig sind.

Der Erfindung liegt daher die Aufgabe zugrunde, ein Bussystem zu schaffen, das eine hohe Verfügbarkeit gewährleistet und zudem bei Ausfällen eine entsprechende Meldung abgibt.

Die Aufgabe wird durch ein Bussystem mit den Merkmalen nach Anspruch 1 gelöst. Dieses Bussystem weist ein Widerstandsnetzwerk auf, dessen Potentialzustand vom Zustand der Verfügbarkeit der Busleitungen abhängt und das mit den Busleitungen und einem Detektor in Verbindung steht, der abhängig vom Potentialzustand ein Meldesignal über die Verfügbarkeit des Bussystems abgibt.

Durch die redundante Auslegung der Busleitungen wird gewährleistet, daß bei einem Fehlerfall einer Busleitung, z.B. einer Unterbrechung oder einem Kurzschluß, die an das Bussystem angeschlossenen Verbraucher über zumindest eine weitere Busleitung betrieben werden können. Das zusätzliche Widerstandsnetzwerk ermöglicht die Überwachung des Bussystems und die schnelle Beseitigung von Schäden, nachdem diese durch einen Detektor gemeldet wurden.

Vorteilhafte Ausgestaltungen der Erfindung sind den Ansprüchen 1 bis 5 zu entnehmen.

Besonders vorteilhaft ist es, ein derartiges Bussystem bei Kraftfahrzeugen zu verwenden, wo eine hohe Verfügbarkeit der Fahrzeugkomponenten erforderlich ist. Das Bussystem ist demgemäß an die Energieversorgungsquelle im Kraftfahrzeug angeschlossenen, wobei die Verbraucher Fahrzeugkomponenten, z.B. Lampen, Antriebe der Zentralverriegelung usw. sind.

Eine besonders einfache Ausführungsform ist gegeben, wenn die Busleitungen als Eindrahtbusleitungen ausgeführt sind und jeweils als Rückleitung das Chassis eines Kraftfahrzeugs dient.

Weiterhin ist es vorteilhaft, wenn die Slaves in unterschiedlicher Reihenfolge an die Busleitungen angekoppelt sind. Beim doppelten Drahtbruch hat dies zur Folge, daß die Energie- und Datenversorgung zumindest über eine Busleitung gewährleistet werden kann. Ein Teilausfall eines Bussystems, z.B. als Folge eines Kraftfahrzeugunfalls, ist auf die Versorgung nicht unmittelbar betroffenen der Verbraucher ohne Einfluß, wenn die Verlegewege der Busleitungen im Kraftfahrzeug zumindest teilweise unterschiedlich sind.

Ist das Widerstandsnetzwerk mit dem Detektor im Slave bzw. im zugehörigen Abzweig untergebracht, so ist vorteilhafterweise eine Meldung über die Verfügbarkeit des betreffenden Abzweigs möglich. Dies erleichtert das Aufsuchen der betreffenden schadhaften Stelle, um den Fehler zu beheben. Ein besonders einfacher Aufbau ist gegeben, wenn das Widerstandsnetzwerk aus ohmschen Widerständen mit praktisch gleichem Impedanzwert aufgebaut ist.

Vorteilhafterweise ist das Widerstandsnetzwerk derart aufgebaut, daß zwischen jeder Busleitung und einem gemeinsamen Verbindungspunkt jeweils ein ohmscher Widerstand liegt und der gemeinsame Verbindungspunkt über einen ohmschen Widerstand mit der Rückleitung verbunden ist.

Ein Ausführungsbeispiel der Erfindung wird im folgenden anhand einer Zeichnung näher erläutert. Es zeigen:
- FIG 1: den Aufbau eines erfindungsgemäßen Bussystems,
- FIG 2: das erfindungsgemäße Bussystem bei einem Kraftfahrzeug in vereinfachter Form und
- FIG 3: die prinzipielle Parallelschaltung zweier Busleitungen mit Anschaltung der Verbraucher in unterschiedlicher Reihenfolge.

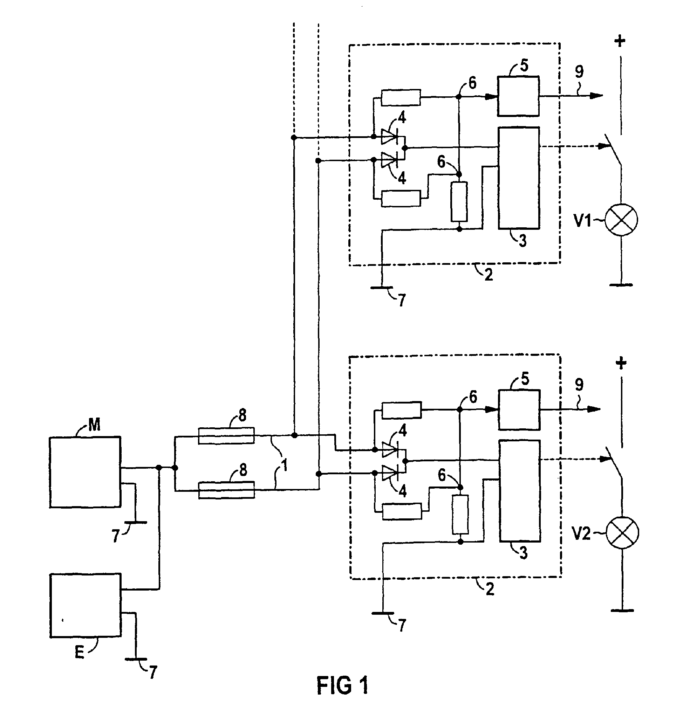

In FIG 1 ist ein Bussystem mit zwei parallelgeschalteten Eindrahtbusleitungen 1 dargestellt, an die zwei Slaves 2 angekoppelt sind. Über die Slaves 2 sind Verbraucher V1, V2 ansteuerbar. Die Ansteuerung erfolgt abhängig von dem über die Busleitungen 1 im Slave 2 empfangenen Daten. Andererseits können an die Slaves 2 auch Schalter und Sensoren angekoppelt sein, deren Zustände dann vom jeweiligen Slave 2 an den Master M über die Busleitungen 1 rückgemeldet werden. Zur Datenankopplung und zur elektrischen Energieversorgung sind die beiden Busleitungen 1 eingangsseitig an einen Master M und eine Energieversorgungsquelle E angekoppelt. Die Energieversorgungsquelle E ist hier eine Spannungsquelle, die die Busspannung zur Verfügung stellt. Grundsätzlich ist aber auch eine Stromquelle anwendbar. Das hier gezeichnete Bussystem ist zur Anwendung in Kraftfahrzeugen geeignet, bei denen die Rückleitung durch das Chassis gegeben ist.

Für andere Anwendungsfälle ist es grundsätzlich möglich, mehrere Zweidrahtleitungen zu verwenden, wobei die Leitungsader zur Hinleitung und die andere zur Rückleitung dient.

Jeder Slave 2 enthält einen integrierten Schaltkreis 3, der über zwei Verpolschutzdioden 4 an die beiden Busleitungen 1 angeschlossen ist. Die Verpolschutzdioden 4 verhindern, daß bei falschem Anschluß des Slaves 2 aufgrund der falschen Stromrichtung hier nicht näher dargestellte Bauteile zerstört werden. Weiterhin weist jeder Slave 2 ein aus gleichen ohmschen Widerständen R aufgebautes Widerstandsnetzwerk auf, das einerseits mit den Busleitungen 1 und andererseits mit einem Detektor 5 verbunden ist. Das Widerstandsnetzwerk ist hier aus drei gleichen ohmschen Widerständen R aufgebaut, wobei jeweils ein ohmscher Widerstand R zwischen einer Busleitung 1 und einem gemeinsamen Verbindungspunkt 6 liegt, an den der Detektor 5 angeschlossen ist. Zwischen dem Verbindungspunkt 6 und der Masse 7 liegt der dritte ohmsche Widerstand R. Der vom Detektor 5 überwachte Potentialzustand des gemeinsamen Verbindungspunktes 6 ist ein Abbild des Zustands der Verfügbarkeit des den jeweiligen Slave 2 mit Daten und Energie versorgenden Bussystems. Sind beide Busleitungen 1 intakt, d.h. liegt an ihnen die von der Energieversorgungsquelle E eingespeiste Spannung, so ist die vom Detektor 5 detektierte Spannung zwei Drittel der Busspannung. Bei Drahtbruch einer der beiden Busleitungen 1 wird am Verbindungspunkt 6 die halbe Busspannung detektiert.

Die vor einem Leitungsbruch liegenden Leitungsabschnitte sind allerdings nicht betroffen, d.h. für die an diesen liegenden Slaves 2 ist die Verfügbarkeit des Bussystems unverändert hoch.

Die beiden Busleitungen 1 sind an ihrem Anfang in der Nähe der Energieversorgungsquelle E jeweils durch eine Sicherung 8 abgesichert, die bei Kurzschlüssen z.B. gegen die Masse 7 auslösen, so daß die Daten- und Energieübertragung hierüber gänzlich unterbrochen ist. Löst bei dem vorliegenden Bussystem mit zwei Busleitungen 1 eine der Sicherungen 8 aus, wird vom Detektor 5 am Verbindungspunkt 6 eine Spannung detektiert, die nur noch ein Drittel der Busspannung beträgt. Jeder Detektor 5 gibt zur Anzeige des jeweiligen Zustands der Verfügbarkeit des Bussystems ein Meldesignal 9 ab.

Die Slaves 2 steuern Verbraucher V1, V2, z.B. Fahrzeugkomponenten wie z.B. Lampen und Antriebe für die Zentralverriegelung an.

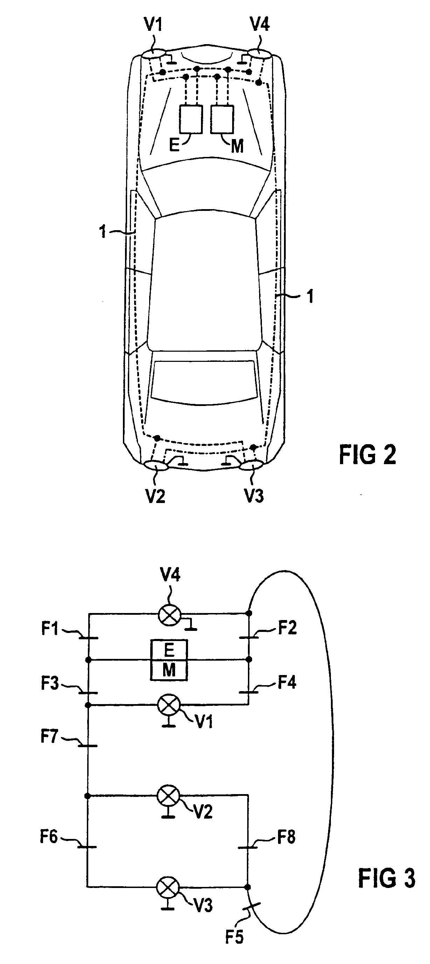

FIG 2 zeigt die Anwendung eines erfindungsgemäßen Bussystems in vereinfachter Form bei einem Kraftfahrzeug. Die beiden Busleitungen 1 sind über unterschiedliche Verlegewege mit den Verbrauchern V1, V2, V3 und V4, die in Form von Lampen bestehen, ausgeführt. Die beiden Busleitungen 1 sind in der Frontpartie des Kraftfahrzeugs an die Energieversorgungsquelle E und den Master M angekoppelt, wobei im vorliegenden Beispiel diese Ankopplung an die Verbindung zwischen den beiden Verbrauchern V1 und V4 erfolgt. Sowohl in der Frontpartie als auch in der Rückpartie des Kraftfahrzeugs sind die beiden Busleitungen 1 parallel geführt, während die Verbindungen von vorn nach hinten bzw. umgekehrt auf unterschiedlichen Wegen erfolgt. Die unterschiedliche Reihenfolge, in der die Verbraucher V1 bis V4 an die beiden Busleitungen 1 angeschlossen sind und ihre zumindest teilweise unterschiedlichen Verlegewege ermöglichen, daß bei einer Reihe von Fehlerfällen, wie sie z.B. bei Beschädigung der Eckpartien des Kraftfahrzeugs auftreten können, die nicht beschädigten Verbraucher zumindest über ein noch teilweise verfügbares Bussystem versorgt werden können.

In FIG 3 ist die Versorgung der vier Verbraucher V1 bis V4 bei unterschiedlichen Fehlerkombinationen, die einem Ausfall eines Eckbereiches entsprechen, verdeutlicht. Dabei werden als Fehlerfälle F1 bis F8 Leitungsbrüche an den in FIG 3 angegebenen Stellen angenommen.

Folgende Tabelle zeigt die Verfügbarkeit bei verschiedenen Fehlerkombinationen:

| | F1/F2 (rechts vorn) | F3/F4 (links vorn) | F5/F6 (rechts hinten) | F7/F8 (links hinten) |
|---|---|---|---|---|
| V1 | ++ | * | ++ | ++ |
| V2 | + | + | + | * |
| V3 | + | + | * | + |
| V4 | * | ++ | ++ | ++ |

Die Fehlerkombinationen F1/F2, F3/F4, F5/F6, F7/F8 entsprechen Ausfällen der Eckbereiche, in denen sich die Verbraucher V1, V2, V3 und V4 befinden. In der Matrix ist mit + die Versorgung der Verbraucher angegeben, wobei ein + die Versorgung über eine Busleitung 1 und zweimal ++ die Versorgung über beide Busleitungen angibt. Ein * gibt den Ausfall des betreffenden Verbrauchers an.

Die Matrix gibt wieder, daß selbst bei größeren Unfallschäden am Kraftfahrzeug eine weitere Versorgung der nicht unmittelbar betroffenen Verbraucher möglich ist.

## Patentansprüche

1. Bussystem, insbesondere für Kraftfahrzeuge, mit mindestens zwei elektrisch parallel geschalteten Busleitungen (1), die jeweils zur Übertragung von Energie und Daten dienen, mit einer an die Busleitungen (1) angeschlossenen Energieversorgungsquelle (E) und mit einem an die Busleitungen (1) angeschlossenen Master (M) zur Einkopplung der Daten und mit mehreren an die Busleitungen (1) angekoppelten Slaves (2), die abhängig von den über die Busleitungen (1) empfangenen Daten jeweils mindestens einen Verbraucher (V1,V2) ansteuern oder Eingangszustände von Schaltern, Sensoren oder Rückmeldungen an den Master (M) liefern, und mit einem Widerstandsnetzwerk (R), dessen Potentialzustand vom Zustand der Verfügbarkeit der Busleitungen (1) abhängt und mit den Busleitungen (1) und einem Detektor (5) in Verbindung steht, der abhängig vom Potentialzustand ein Meldesignal (9) über die Verfügbarkeit des Bussystems abgibt, **dadurch gekennzeichnet, dass** das Widerstandsnetzwerk aus ohmschen Widerständen (R) mit praktisch gleichem Impedanzwert aufgebaut ist und das Widerstandsnetzwerk derart aufgebaut ist, dass zwischen jeder der mindestens zwei Busleitungen (1) und einem gemeinsamen Verbindungspunkt (6) jeweils ein ohmscher Widerstand (R) liegt und der gemeinsame Verbindungspunkt (6) über einen ohmschen Widerstand (R) mit einer Rückleitung (7) des Bussystems verbunden ist.

2. Bussystem nach Anspruch 1, **gekennzeichnet durch** den Anschluss an die Energieversorgungsquelle (E) im Kraftfahrzeug, wobei die Verbraucher (V1,V2,V3,V4) Fahrzeugkomponenten, z.B. Lampen, Antriebe der Zentralverriegelung usw. sind.

3. Bussystem nach Anspruch 1 oder 2, **dadurch gekennzeichnet, dass** die Busleitungen als Eindrahtbusleitungen (1) ausgeführt sind und jeweils als Rückleitung das Chassis (7) eines Kraftfahrzeugs dient.

4. Bussystem nach einem der vorangehenden Ansprüche, **dadurch gekennzeichnet, dass** die Slaves (2) in unterschiedlicher Reihenfolge an die Busleitungen (1) angekoppelt sind.

5. Bussystem nach einem der vorangehenden Ansprüche, **dadurch gekennzeichnet, dass** die Verlegewege der Busleitungen (1) im Kraftfahrzeug zumindest teilweise unterschiedlich sind.

## Claims

1. Bus system, in particular for motor vehicles, having at least two bus lines (1) which are connected in parallel electrically and which are each used to transmit power and data, having a power supply source (E) which is connected to the bus lines (1), and having a master (M) which is connected to the bus lines (1), for inputting the data, and having a plurality of slaves (2) which are coupled to the bus lines (1) and which each actuate at least one load (V1, V2) or supply input states of switches, sensors or acknowledge messages to the master (M) as a function of the data received via the bus lines (1), and having a resistor network (R) whose potential state depends on the state of the availability of the bus lines (1) and is connected to the bus lines (1) and to a detector (5) which outputs a message signal (9) relating to the availability of the bus system, as a function of the potential state, **characterized in that** the resistor network is made up of ohmic resistors (R) with virtually the same impedance value, and the resistor network is constructed in such a way that in each case an ohmic resistor (R) is located between each of the at least two bus lines (1) and a common connecting point (6), and the common connecting point (6) is connected to a return line (7) of the bus system via an ohmic resistor (R).

2. Bus system according to Claim 1, **characterized by** the connection to the power supply source (E) in the motor vehicle, the loads (V1, V2, V3, V4) being vehicle components, for example lamps, drives of the central locking system, etc.

3. Bus system according to Claim 1 or 2, **characterized in that** the bus lines are embodied as single-wire bus lines (1) and in each case the chassis (7) of a motor vehicle serves as the return line.

4. Bus system according to one of the preceding claims, **characterized in that** the slaves (2) are coupled to the bus lines (1) in a different sequence.

5. Bus system according to one of the preceding claims, **characterized in that** the routing paths of the bus lines (1) in the motor vehicle are at least partially different.

## Revendications

1. Système de bus, notamment pour des véhicules automobiles, avec au moins deux lignes de bus (1) branchées électriquement en parallèle qui servent chacune à la transmission d'énergie et de données, avec une source d'alimentation en énergie (E) raccordée aux lignes de bus (1), avec un maître (M) raccordé aux lignes de bus (1) et destiné à l'introduction des données ainsi qu'avec plusieurs esclaves (2) qui sont raccordés aux lignes de bus (1) et qui commandent en fonction des données reçues via les lignes de bus (1) à chaque fois au moins un consommateur (V1, V2) ou qui fournissent au maître (M) des états d'entrée d'interrupteurs, de capteurs ou de messages en retour, et avec un réseau de résistances (R) dont l'état de potentiel dépend de l'état de la disponibilité des lignes de bus (1) et qui est en liaison avec les lignes de bus (1) et avec un détecteur (5) qui fournit un signal d'avertissement (9) concernant la disponibilité du système de bus en fonction de l'état de potentiel, **caractérisé par le fait que** le réseau de résistances est construit à partir de résistances ohmiques (R) ayant pratiquement la même valeur d'impédance et que le réseau de résistances est construit de telle sorte qu'une résistance ohmique (R) se trouve entre chacune des au moins deux lignes de bus (1) et un point de jonction commun (6) et que le point de jonction commun (6) est relié par l'intermédiaire d'une résistance ohmique (R) à une ligne de retour (7) du système de bus.

2. Système de bus selon la revendication 1, **caractérisé par** le raccordement à la source d'alimentation en énergie (E) dans le véhicule automobile, les consommateurs (V1, V2, V3, V4) étant des composants de véhicule, par exemple des lampes, des moteurs du système de verrouillage central, etc..

3. Système de bus selon la revendication 1 ou 2, **caractérisé par le fait que** les lignes de bus sont réalisées comme des lignes de bus monofilaires (1) et que le châssis (7) d'un véhicule automobile sert à chaque fois de ligne de retour.

4. Système de bus selon l'une des revendications précédentes, **caractérisé par le fait que** les esclaves (2) sont raccordés dans un ordre différent aux lignes de bus (1).

5. Système de bus selon l'une des revendications précédentes, **caractérisé par le fait que** les trajets de pose des lignes de bus (1) dans le véhicule automobile sont au moins partiellement différents.
